# EUROPÄISCHE PATENTSCHRIFT

(11) **EP 3 409 179 B1**
(45) Veröffentlichungstag und Bekanntmachung des Hinweises auf die Patenterteilung: **27.11.2019**
(21) Anmeldenummer: 18171968.3
(22) Anmeldetag: 14.05.2018
(51) Int. Cl.: A47L 15/42, D06F 39/00

(54) **WASCHMASCHINE, INSBESONDERE HAUSHALTSGESCHIRRSPÜLMASCHINE**
DISHWASHER, ESPECIALLY DOMESTIC DISHWASHER
MACHINE À LAVER, EN PARTICULIER LAVE-VAISSELLE DOMESTIQUE

(30) Priorität: 29.05.2017 DE 102017111581
(43) Veröffentlichungstag der Anmeldung: 05.12.2018
(73) Patentinhaber: Miele & Cie. KG, 33332 Gütersloh (DE)
(72) Erfinder: Bertram, Andre, 33609 Bielefeld (DE); Dahms, Tobias, 30519 Hannover (DE); Wolf, Cornelius, 33739 Bielefeld (DE); Steinmeier, Ralph, 32052 Herford (DE); Tegeler, Daniel, 33649 Bielefeld (DE)

(56) Entgegenhaltungen:
- WO-A1-2016/134938
- AT-A1- 506 553

## Beschreibung

Die Erfindung betrifft eine Waschmaschine, etwa eine Textilwaschmaschine oder eine Geschirrspülmaschine, insbesondere eine Haushaltsgeschirrspülmaschine, mit einem einen Wasch-/Spülraum bereitstellenden Wasch-/Spülbehälter, der der Aufnahme von zu reinigendem Wasch-/Spülgut dient, und einer Wärmepumpeneinrichtung, die einen Verdichter aufweist.

Waschmaschinen der eingangs genannten Art sind aus dem Stand der Technik an sich wohl bekannt. Eines gesonderten druckschriftlichen Nachweises bedarf es an dieser Stelle deshalb nicht.

Vorbekannte Waschmaschinen verfügen über einen Spülbehälter, auch Bottich genannt, der einen Spülraum bereitstellt. Dieser ist verwenderseitig über eine Beschickungsöffnung zugänglich, die mittels einer verschwenkbar gelagerten Spülraumtür fluiddicht verschließbar ist. Im bestimmungsgemäßen Verwendungsfall dient der Spülbehälter der Aufnahme von zu reinigendem Spülgut, bei dem es sich beispielsweise um Wäsche oder um Geschirr, Besteckteile und/oder dergleichen handeln kann.

Zur Beaufschlagung von zu reinigendem Spülgut mit Spülflüssigkeit, der sog. Spülflotte, verfügt eine Geschirrspülmaschine im Innenraum des Spülbehälters über eine Sprüheinrichtung. Diese Sprüheinrichtung stellt typischerweise verdrehbar gelagerte Sprüharme zur Verfügung, wobei in der Regel zwei oder drei solcher Sprüharme vorgesehen sind. Im bestimmungsgemäßen Verwendungsfall erfolgt eine Beaufschlagung des zu reinigenden Spülguts mit Spülflotte mittels sich drehender Sprüharme.

Die von der Sprüheinrichtung im Betriebsfall abgegebene Spülflotte trifft auf das zu reinigende Spülgut und sammelt sich alsdann in einem Sammeltopf des Spülbehälters an. Der Sammeltopf ist an eine Umwälzpumpe einerseits und an eine Ablaufpumpe andererseits angeschlossen. Zur Beaufschlagung der Sprüheinrichtung mit Spülflotte dient die Umwälzpumpe, die im bestimmungsgemäßen Verwendungsfall die in die Geschirrspülmaschine eingeförderte Spülflüssigkeit umwälzt. Mit Abschluss eines Spülprogramms wird die Spülflotte mittels der Ablaufpumpe verworfen und abgepumpt. Waschmaschinen der eingangs genannten Art können bekanntermaßen mit einer Wärmepumpeneinrichtung ausgestattet sein, um den Energieverbrauch insbesondere bei einem Aufheizen der Spülflotte zu reduzieren, insbesondere deshalb, weil ein solches Aufheizen der Spülflotte bei einer Geschirrspülmaschine den größten Teil am Energieverbrauch ausmacht.

Aus der EP 2 682 038 A2 ist eine Geschirrspülmaschine mit einer Luft-Wasser-Wärmepumpeneinrichtung bekannt. Im Betriebsfall entzieht die Wärmepumpeneinrichtung der Umgebungsatmosphäre, das heißt der die Geschirrspülmaschine umgebenden Luft Wärmeenergie, um diese auf die im Inneren der Geschirrspülmaschine umgewälzte Spülflotte zu übertragen. Die Wärmepumpeneinrichtung verfügt zu diesem Zweck in an sich bekannter Weise über einen Verdampfer, einen Verdichter, einen Verflüssiger und einen diese Komponenten miteinander strömungstechnisch verbindenden Strömungs- oder Umwälzkreislauf. Dabei dient der Verflüssiger als Wärmetauscher, mittels dem Wärmeenergie von einem im Strömungskreislauf der Wärmepumpeneinrichtung umgewälzten Arbeitsmedium auf die Spülflotte übertragen wird.

Im bestimmungsgemäßen Verwendungsfall der Wärmepumpeneinrichtung wird zwecks Aufheizung der Spülflotte mittels Ventilatoren Raumluft angesaugt und über den Verdampfer der Wärmepumpeneinrichtung geleitet. Dies führt zu einer Abkühlung der zugeführten Raumluft, wobei die der Raumluft entzogene Wärmeenergie auf das Arbeitsmedium übertragen wird, das infolge dessen im Verdampfer verdampft. Das daraufhin in gasförmiger Form vorliegende Arbeitsmedium wird anschließend in dem Verdichter komprimiert und so auf ein höheres Temperaturniveau gebracht. Schließlich erfolgt eine Einleitung des gasförmigen Arbeitsmediums in den Verflüssiger, wo unter Energiefreigabe eine Verflüssigung des Arbeitsmediums stattfindet. Die dabei frei werdende Wärmeenergie dient der Spülflottenaufheizung.

Aus dem Stand der Technik ist gleichfalls der Einsatz von Wasser-Wasser-Wärmepumpeneinrichtungen bekannt, so zum Beispiel aus der EP 2 206 824 A2. Im bestimmungsgemäßen Verwendungsfall wird mit einer solchen Wärmepumpeneinrichtung nicht der Umgebungsatmosphäre, sondern einem Flüssigkeitsreservoir Wärmeenergie entzogen. Die EP 2 206 824 A2 sieht zu diesem Zweck einen geschlossenen Wassertank vor, der den Verdampfer der Wärmepumpeneinrichtung beherbergt. Im Betriebsfall kommt es infolge eines Wärmeenergieentzugs zu einer Abkühlung des im Tank bevorrateten Wassers. Dabei kann eine Abkühlung des Wassers bis zur Vereisung vorgenommen werden.

Die WO 2016134938 A1 offenbart ebenfalls eine Geschirrspülmaschine mit einem einen Spülraum bereitstellenden Spülbehälter und einer Wärmepumpeneinrichtung, die einen Verdichter aufweist. Die AT 506553 A1 offenbart eine Waschmaschine mit einem einen Waschraum bereitstellenden Waschbehälter und einer Wärmepumpeneinrichtung, die einen Verdichter aufweist.

Den vorbekannten Konstruktionen ist es systembedingt gemein, dass sich der Verdichter der Wärmepumpeneinrichtung bei einem Betrieb der Wärmepumpeneinrichtung aufheizt. Die infolge dessen vom Verdichter ausgehende Wärmestrahlung erwärmt in nachteiliger Weise unnötig dem Verdichter nebengeordnete Baukomponenten der Geschirrspülmaschine. Es kommt insoweit zu einem Energieentzug mit der Folge einer verringerten Energieeffizienz der Wärmepumpeneinrichtung, denn die zur Erwärmung der dem Verdichter nebengeordneten Baukomponenten der Geschirrspülmaschine benötigte Energie kann für die Durchführung eines Spülprogramms nicht genutzt werden.

Es ist deshalb ausgehend vom Vorbeschriebenen die **Aufgabe** der Erfindung, eine Waschmaschine vorzuschlagen, bei der die Wärmepumpeneinrichtung eine verbesserte Energieeffizienz aufweist.

Zur **Lösung** dieser Aufgabe wird mit der Erfindung eine Waschmaschine, insbesondere eine Textilwaschmaschine oder eine Geschirrspülmaschine mit den Merkmalen von Anspruch 1 vorgeschlagen.

Der erfindungsgemäß vorgesehene Strahlungsschirm dient dazu, die Umgebung des Verdichters gegenüber dem Verdichter zumindest teilweise abzuschirmen. Im Ergebnis dieser Abschirmung steht, dass nur eine verminderte Strahlungsmenge zur Erwärmung der Verdichterumgebung verloren geht, das heißt die Wärmestrahlungsverluste minimiert sind.

Der Verdichter, bei dem es sich beispielsweise um einen horizontal ausgerichteten Rollkolbenverdichter handelt, wird zumindest partiell mittels des Strahlungsschirms zu seiner Umgebung abgeschirmt. Die verbleibende wärmeabstrahlende Seite des Verdichters ist bevorzugterweise einer wärmeabsorbierenden Fläche des Wasch-/Spülbehälters mit hohem Emissionsgrad von vorzugsweise > 0,9 zugewandt. Die vom Verdichter abgegebene Wärmestrahlung kann damit gezielt einem Spülprozess zugeführt werden, denn der durch die vom Verdichter abgegebene Wärmestrahlung erwärmte Wasch-/Spülbehälter erwärmt wiederum die im Innenraum des Wasch-/Spülbehälter vorhandene, beispielsweise umgewälzte Spül- bzw. Waschflotte.

Der erfindungsgemäß vorgesehene Strahlungsschirm sorgt mithin dafür, dass die unnötige Erwärmung von zum Verdichter benachbarten Baukomponenten unterbleibt. Denn diese werden durch den Strahlungsschirm abgeschirmt, der damit als Barriere für die vom Verdichter abgegebene Wärmestrahlung dient. In Ergänzung hierzu kann ferner vorgesehen sein, diejenige Strahlung des Verdichters, die in Richtung des Wasch-/Spülbehälters abgegeben wird, besser dadurch nutzbar zu machen, dass der Wasch-/Spülbehälter verdichterseitig mit einer wärmeabsorbierenden Beschichtung ausgerüstet ist. Dabei erbringt eine solche Beschichtung den synergetischen Effekt, dass eine gezielte Aufheizung des Wasch-/Spülbehälters und damit auch der davon bevorrateten Spülflotte stattfindet und dass andererseits eine Reflektion der Wärmestrahlung am Wasch-/Spülbehälter zurück in Richtung auf den Verdichter oder auf hierzu benachbarte Baukomponenten minimiert, oder sogar nahezu unterbunden ist. Die wärmeabsorbierende Beschichtung kann beispielsweise durch eine Bitumenmatte gebildet sein und/oder einen Emissionsgrad von > 0,9 bereitstellen. Ein hoher Emissionsgrad bedeutet bekanntermaßen, dass ein Körper sowohl viel Wärme emittieren und im Umkehrschluss aber auch viel Wärmestrahlung absorbieren kann. Ein geringer Emissionsgrad hingegen emittiert weniger Wärmestrahlung bzw. reflektiert eintreffende Wärmestrahlung größerenteils, so dass nur wenig Wärmestrahlung absorbiert wird.

Gemäß einer ersten Alternative der Erfindung ist der Strahlungsschirm eine Beschichtung, die außenseitig auf das Gehäuse des Verdichters aufgebracht ist. Diese Beschichtung ist als reflektionsarme Beschichtung ausgebildet und verhindert so einen Strahlungsabgang in Richtung der im Wirkschatten der Beschichtung liegenden Baukomponenten. Dabei darf die Beschichtung das Gehäuse des Verdichters nicht vollflächig abdecken, da es im Betrieb der Wärmepumpeneinrichtung ansonsten zu einer Überhitzung des Verdichters kommen könnte. Die Beschichtung ist in Ihrer Flächenabdeckung des Gehäuses mithin so zu wählen, dass die Betriebsgrenzen des Verdichters nicht überschritten sind.

Gemäß einer zweiten Alternative der Erfindung ist vorgesehen, dass der Strahlungsschirm ein zum Verdichter beabstandet angeordneter Reflektor ist.

Dabei schirmt der Reflektor wünschenswerterweise nicht aufzuheizende Baukomponenten der Geschirrspülmaschine nicht nur ab, er sorgt auch dafür, dass in Richtung des Reflektors abgegebene Wärmestrahlung am Reflektor reflektiert und zurück in Richtung des Verdichters und damit auch in Richtung des Wasch-/Spülbehälters umgelenkt wird. Dabei ist für die Wirksamkeit des Reflektors von entscheidender Bedeutung, dass der Emissionsgrad möglichst klein ist, vorzugsweise unter 0,2, insbesondere unter 0,1 liegt. Es wird deshalb in diesem Zusammenhang vorgeschlagen, den Reflektor aus Metall, vorzugsweise aus Edelstahl oder Aluminium zu bilden, wobei die verdichterseitige Reflektorfläche vorzugsweise poliert ist. Eine polierte Edelstahlfläche hat einen Emissionsgrad von ca. 0,05. Eine preisgünstige Alternative ist ein aus einem Aluminiumblech gebildeter Reflektor, der poliert einen Emissionsgrad von < 0,1 aufweist.

Alternativ kann der Reflektor aus Kunststoff gebildet sein, wobei in diesem Fall bevorzugterweise eine verdichterseitige Verspiegelung des Reflektors vorgesehen ist. Die Verspiegelung kann durch Metallbedampfung oder durch Lackieren ausgebildet sein.

Der Reflektor kann gemäß einem weiteren Merkmal der Erfindung das Gehäuse des Verdichters zumindest teilweise konzentrisch umgeben oder er ist parabolisch, das heißt nach Art eines Parabolspiegels ausgebildet. Alternativ kann der Reflektor als Abschnitt der Bodenwanne der Geschirrspülmaschine ausgebildet sein. Gemäß dieser Alternative wird auf ein zusätzliches Bauteil verzichtet und die Bodenwanne als Reflektor genutzt, wobei es bevorzugt ist, den als Reflektor dienenden Abschnitt der Bodenwanne in schon vorbeschriebener Weise mit einer Reflektionsfläche auszubilden, die einen möglichst kleinen Emissionsgrad aufweist.

Gemäß einem weiteren Merkmal ist vorgesehen, den Wasch-/Spülbehälter zumindest bereichsweise mit einer Wärmedämmung zu versehen. Die Wärmedämmung soll während der Durchführung eines Spülprogramms dafür Sorge tragen, dass dem Spülbehälter und der davon bevorrateten Spülflotte nicht ungewollt Energie entzogen wird. Eine solche Isolierung steht dementsprechend auch einer Wärmeaufnahme durch vom Verdichter abgegebene Wärmestrahlung entgegen. Es wird deshalb gemäß einem weiteren Merkmal der Erfindung vorgeschlagen, dass die verdichterseitig am Wasch-/Spülbehälter angebrachte Isolierung eine Ausnehmung aufweist. Dabei ist die Ausnehmung hinsichtlich ihrer geometrischen Abmessungen so bemessen, dass sie die Wirkfläche der vom Verdichter abgegebenen Wärmestrahlung abdeckt, das heißt die vom Verdichter abgegebene Wärmestrahlung den Wasch-/Spülbehälter erreichen kann.

Bevorzugt ist es in diesem Zusammenhang ferner, den Wasch-/Spülbehälter im Überdeckungsbereich mit der Ausnehmung außenseitig mit einer Beschichtung auszurüsten, die einen möglichst hohen Emissionsgrad, insbesondere einen Emissionsgrad von > 0,9 bereitstellt. Bei einer solchen Beschichtung kann es sich beispielsweise um Bitumen handeln.

Insgesamt erbringt die erfindungsgemäße Ausgestaltung, dass die im Betriebsfall nicht zu vermeidende Abwärme des Verdichters nicht vollständig für den Spülprozess verloren geht. Dies deshalb nicht, weil der erfindungsgemäß vorgesehene Strahlungsschirm dafür Sorge trägt, den Verdichter zu seiner Umgebung zumindest teilweise abzuschirmen. Vorzugsweise ist zudem vorgesehen, den Wasch-/Spülbehälter verdichterseitig mit einer wärmeabsorbierenden Beschichtung auszustatten, so dass die vom Verdichter abgegebene und den Wasch-/Spülbehälter erreichende Wärmestrahlung effektiv zur Aufheizung des Wasch-/Spülbehälters und damit auch der darin befindlichen Spülflotte genutzt werden kann. Im Ergebnis ist so eine Effizienzsteigerung der gesamten Wärmepumpeneinrichtung erreicht.

Weitere Merkmale und Vorteile der Erfindung ergeben sich aus der nachfolgenden Beschreibung anhand der Figuren. Dabei zeigen
- Fig. 1: in schematischer Darstellung eine erfindungsgemäße Geschirrspülmaschine;
- Fig. 2: in schematischer Frontansicht einen Verdichter;
- Fig. 3: in einer schematischen Seitenansicht den Verdichter nach Fig. 2;
- Fig. 4: in schematischer Frontansicht ein Wärmestrahlung abgebender Verdichter;
- Fig. 5: in schematischer Frontansicht ein Verdichter mit einem Strahlungsschirm gemäß einer ersten Ausführungsform;
- Fig. 6: in schematischer Frontansicht ein Verdichter mit einem Strahlungsschirm gemäß einer zweiten Ausführungsform;
- Fig. 7: in schematischer Frontansicht ein Verdichter mit einem Strahlungsschirm gemäß einer dritten Ausführungsform;
- Fig. 8: in einer schematischen Frontansicht einen erfindungsgemäß ausgerüsteten Verdichter gemäß einer weiteren Ausführungsform;
- Fig. 9: in schematischer Seitenansicht den Verdichter nach Fig. 8;
- Fig. 10: in einer schematischen Darstellung die erfindungsgemäße Geschirrspülmaschine gemäß einer weiteren Ausführungsform und
- Fig. 11: in schematischer Draufsicht von oben eine Spülbehälterisolierung.

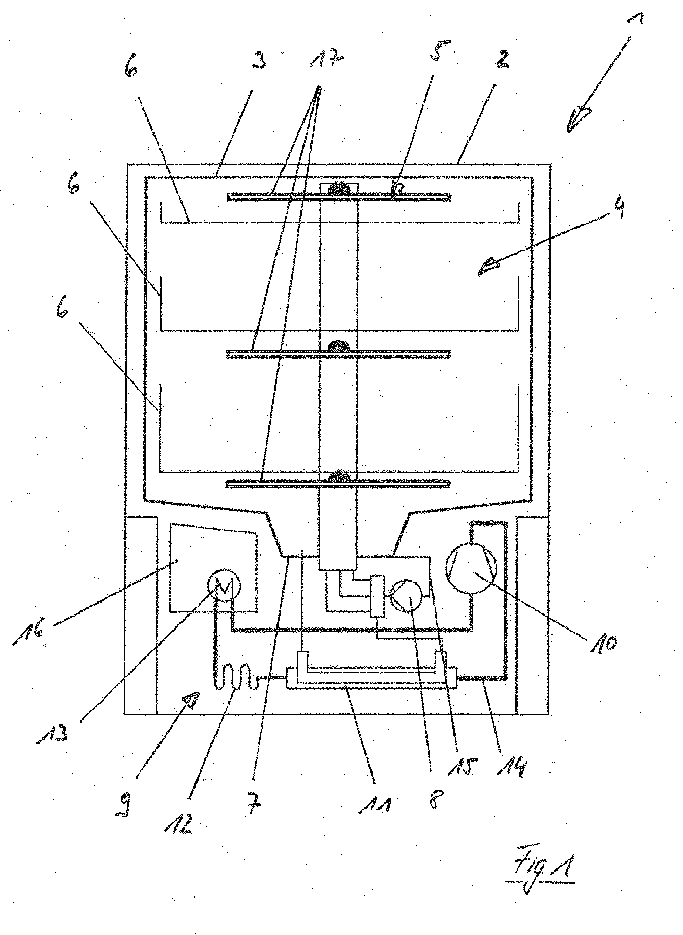

Fig. 1 lässt in rein schematischer Darstellung eine Waschmaschine, ohne Beschränkung der Allgemeinheit in Gestalt einer Geschirrspülmaschine 1, insbesondere einer Haushaltsspülmaschine nach der Erfindung erkennen.

Die Geschirrspülmaschine 1 verfügt über ein Gehäuse 2, das unter anderem einen Spülbehälter 3 aufnimmt. Der Spülbehälter 3 stellt seinerseits einen Spülraum 4 bereit, der im bestimmungsgemäßen Verwendungsfall der Aufnahme von zu reinigendem Spülgut dient.

Zur Beschickung von zu reinigendem Spülgut mit Spülflotte dient eine Sprüheinrichtung 5, die innerhalb des Spülbehälters 3 angeordnet ist. Bevorzugterweise verfügt eine solche Sprüheinrichtung über Sprüharme 17, die jeweils verdrehbar innerhalb des Spülbehälters 3 angeordnet sind.

Im gezeigten Ausführungsbeispiel dienen zur Aufnahme des zu reinigenden Spülguts Spülkörbe 6, wobei drei solcher Spülkörbe 6 vorgesehen sind.

Der Spülraum 4 mündet in einen im Detail nicht näher dargestellten Sammeltopf 7 des Spülbehälters 3 ein, an dem eine Umwälzpumpe 8 strömungstechnisch angeschlossen ist.

Über entsprechende Versorgungsleitungen ist die Sprüheinrichtung 5 an die Umwälzpumpe 8 strömungstechnisch angeschlossen. Im bestimmungsgemäßen Verwendungsfall kann damit eine Beschickung der Sprüheinrichtung 5 mit Spülflotte mittels der Umwälzpumpe 8 stattfinden.

Die Geschirrspülmaschine 1 verfügt desweiteren über eine Wärmepumpeneinrichtung 9. Diese weist einen Verdichter 10, einen Verflüssiger 11, ein Expansionsorgan in Form einer Drossel 12, einen Verdampfer 13 sowie einen diese Baukomponenten strömungstechnisch miteinander verbindenden Strömungskreislauf 14 auf, in dem ein Arbeitsmedium geführt ist.

Der Verdampfer 13 ist innerhalb eines Tanks 16 angeordnet, der mit Wasser als Wärmeträgermedium befüllt ist.

Im bestimmungsgemäßen Verwendungsfall der Wärmepumpeneinrichtung 9 findet mit Hilfe des Verflüssigers 11 ein Wärmeübertrag von dem im Strömungskreislauf 14 der Wärmepumpeneinrichtung 9 geführten Arbeitsmedium auf die Spülflotte statt. Zu diesem Zweck ist ein an die Umwälzpumpe angeschlossener Umwälzkreislauf 15 vorgesehen, der der Spülflottenumwälzung dient. Die im Betriebsfall im Verflüssiger 11 durch Verflüssigung des Arbeitsmediums freiwerdende Wärmeenergie wird mithin auf die im Umwälzkreislauf 15 umgewälzte Spülflotte vorgetragen, zu welchem Zweck ein entsprechend ausgebildeter Wärmetauscher vorgesehen ist.

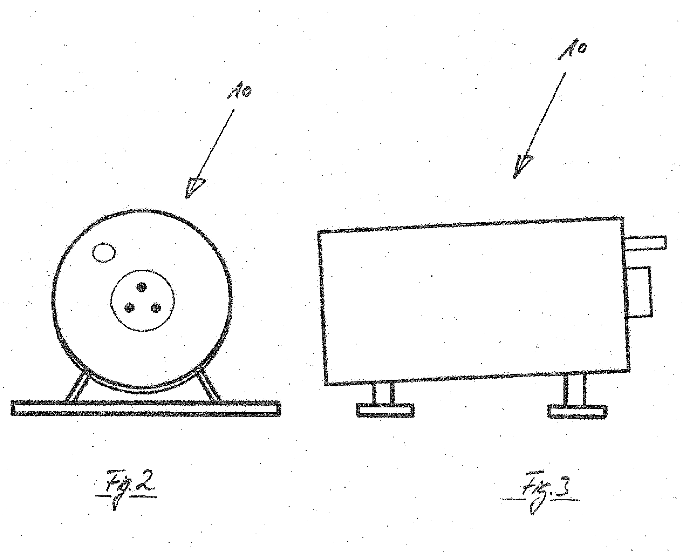

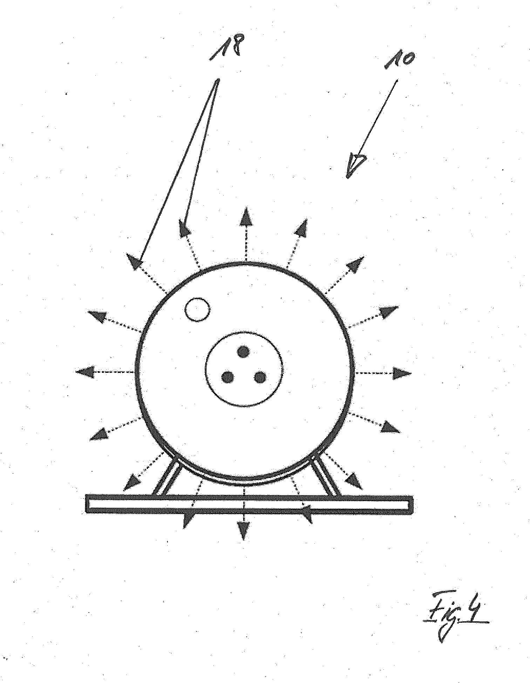

Bei dem Verdichter 10 handelt es sich bevorzugterweise um einen Rollenkolbenverdichter, wie er schematisch in Fign. 2 und 3 dargestellt ist. Im bestimmungsgemäßen Betriebsfall gibt der Verdichter 10 Abwärme in Form von Wärmestrahlung 18 ab, wie dies die Darstellung nach Fig. 4 erkennen lässt. Diese vom Verdichter 10 abgegebene Wärmestrahlung 18 geht dem Spülprozess als Abwärme verloren.

Erfindungsgemäß ist deshalb ein Strahlungsschirm vorgesehen, der mit dem Verdichter 10 zusammenwirkt. Dabei schirmt der Strahlungsschirm die Umgebung des Verdichters 10 gegenüber dem Verdichter 10 zumindest teilweise ab.

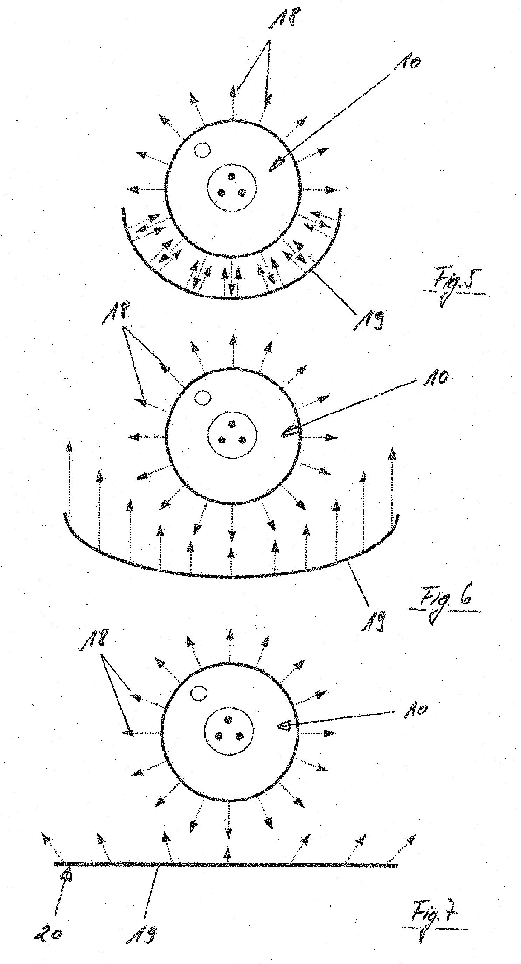

Ein solcher Strahlungsschirm kann beispielsweise durch einen Reflektor 19 gebildet sein, wie er in unterschiedlichen Ausführungsformen in den Fign. 5, 6, und 7 dargestellt ist.

Gemäß der Ausführungsform nach Fig. 5 umgibt der Reflektor 19 das Gehäuse des Verdichters 10 zumindest teilweise konzentrisch. Dabei ist der Reflektor im Abstand von ca. 1 mm bis 50 mm, besonders bevorzugt von ca. 10 mm bis 15 mm zum Verdichter 10 angeordnet.

Eine alternative Ausgestaltung zeigt Fig. 6, wonach der Reflektor 19 nach Art eines Parabolspiegels parabolisch ausgebildet ist.

Der Reflektor besitzt bevorzugterweise verdichterseitig eine verspiegelte Fläche. Zu diesem Zweck kann beispielsweise vorgesehen sein, den Reflektor 19 aus einem Kunststoffmaterial zu bilden, welches verdichterseitig verspiegelt ausgebildet ist, beispielsweise durch Lackieren oder durch Bedampfen. Alternativ besteht der Reflektor 19 aus einem Metall wie zum Beispiel Edelstahl oder Aluminium, wobei die verdichterseitige Oberfläche des Reflektors 19 poliert ist.

Fig. 7 zeigt eine Ausführungsform, dergemäß der Reflektor 19 als Abschnitt der Bodenwanne 20 der Geschirrspülmaschine 1 ausgebildet ist. Auf die separate Ausgestaltung eines Reflektors 19 ist gemäß diesem Ausführungsbeispiel verzichtet, indem ein Abschnitt der Bodenwanne 20 so ausgebildet ist, dass er als Reflektor 19 dient.

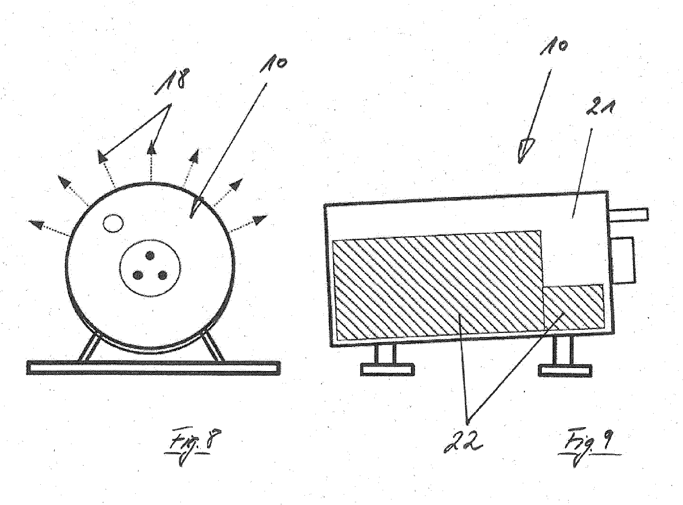

Eine weitere Ausführungsform zeigen die Fign. 8 und 9. Gemäß dieser Ausführungsform ist der Strahlungsschirm als Beschichtung 22 ausgebildet, die außenseitig auf das Gehäuse 21 des Verdichters 10 aufgebracht ist.

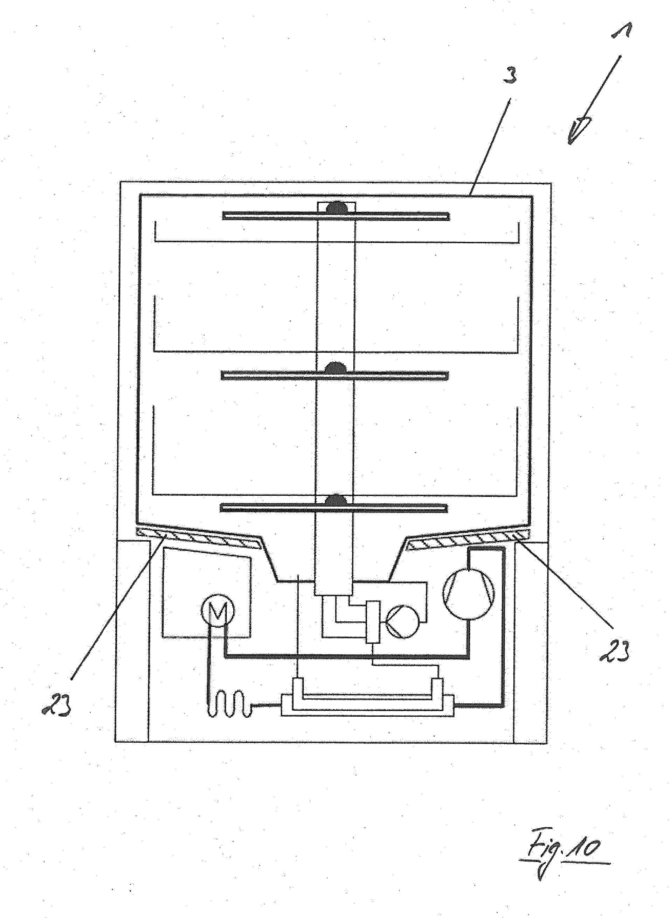

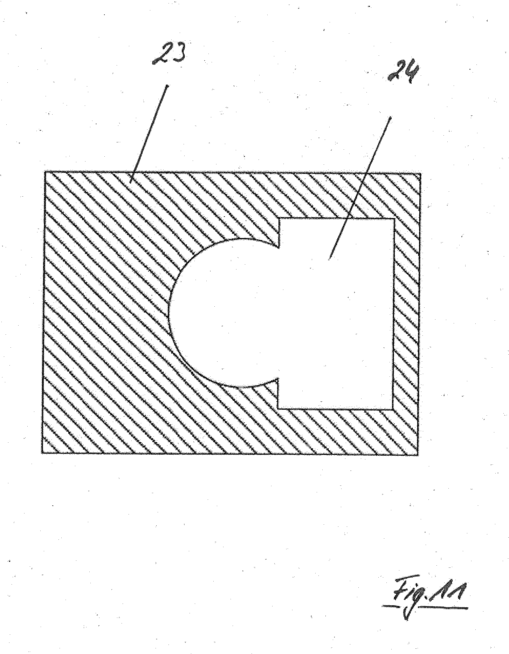

Fig. 10 lässt die Geschirrspülmaschine 1 nach der Erfindung erkennen, wobei sich aus dieser Darstellung ergibt, dass der Spülbehälter 3 unterseitig mit einer Isolierung 23 abgedeckt ist. Diese Isolierung trägt dafür Sorge, dass der Spülbehälter nicht unnötig Wärme an die Umgebung abgibt. Um zu ermöglichen, dass vom Verdichter 10 ausgehende Wärmestrahlung vom Spülbehälter absorbiert werden kann, ist die Isolierung 23 in Entsprechung der Ausgestaltung des Verdichters mit einer Ausnehmung 24 ausgerüstet, wie sich dies aus der Darstellung nach Fig. 11 ergibt. Im Überdeckungsbereich mit der Ausnehmung 24 ist der Spülbehälter verdichterseitig bevorzugterweise mit einer Beschichtung beispielsweise aus Bitumen ausgerüstet, das heißt mit einer Beschichtung, die einen hohen Emissionsgrad von > 0,9 aufweist. Damit ist eine effektive Aufnahme der vom Verdichter ausgehenden Wärmestrahlung durch den Spülbehälter 3 gewährleistet.

### Bezugszeichen

- 1: Waschmaschine
- 2: Gehäuse
- 3: Wasch-/Spülbehälter
- 4: Wasch-/Spülraum
- 5: Sprüheinrichtung
- 6: Spülkorb
- 7: Sammeltopf
- 8: Umwälzpumpe
- 9: Wärmepumpeneinrichtung
- 10: Verdichter
- 11: Verflüssiger
- 12: Drossel
- 13: Verdampfer
- 14: Strömungskreislauf
- 15: Umwälzkreislauf
- 16: Tank
- 17: Sprüharm
- 18: Wärmestrahlung
- 19: Reflektor
- 20: Bodenwanne
- 21: Gehäuse des Verdichters
- 22: Beschichtung
- 23: Isolierung
- 24: Ausnehmung

## Patentansprüche

1. Waschmaschine, insbesondere Haushaltsgeschirrspülmaschine mit einem einen Wasch-/Spülraum (4) bereitstellenden Wasch-/Spülbehälter (3), der der Aufnahme von zu reinigendem Wasch-/Spülgut dient, und einer Wärmepumpeneinrichtung (9), die einen Verdichter (10) und einen mit dem Verdichter (10) zusammenwirkenden Strahlungsschirm aufweist, **dadurch gekennzeichnet, dass** der Strahlungsschirm eine außenseitig auf das Gehäuse (21) des Verdichters (10) aufgebrachte Beschichtung (22) oder ein zum Verdichter (10) beabstandet angeordneter Reflektor (19) ist.

2. Waschmaschine nach Anspruch 1,
**dadurch gekennzeichnet,**
**dass** der Reflektor (19) aus Metall, vorzugsweise aus Edelstahl oder Aluminium besteht.

3. Waschmaschine nach Anspruch 1,
**dadurch gekennzeichnet**
**dass** der Reflektor (19) aus Kunststoff besteht.

4. Waschmaschine nach einem der vorhergehenden Ansprüche,
**dadurch gekennzeichnet**
**dass** der Reflektor (19) verdichterseitig verspiegelt ist.

5. Waschmaschine nach einem der vorhergehenden Ansprüche,
**dadurch gekennzeichnet,**
**dass** der Reflektor (19) das Gehäuse (21) des Verdichters (10) zumindest teilweise konzentrisch umgibt.

6. Waschmaschine nach einem der vorhergehenden Ansprüche 1 bis 4,
**dadurch gekennzeichnet**
**dass** der Reflektor (19) zumindest abschnittsweise parabolisch ausgebildet ist.

7. Waschmaschine nach einem der vorhergehenden Ansprüche 1 bis 4,
**dadurch gekennzeichnet, dass** der Reflektor (19) als Abschnitt der Bodenwanne (20) der Geschirrspülmaschine (1) ausgebildet ist.

8. Waschmaschine nach einem der vorhergehenden Ansprüche,
**dadurch gekennzeichnet,**
**dass** eine außenseitig am Wasch-/Spülbehälter (3) angebrachte Isolierung (23) eine Ausnehmung (24) aufweist.

9. Waschmaschine nach Anspruch 8,
**dadurch gekennzeichnet,**
**dass** der Wasch-/Spülbehälter (3) im Überdeckungsbereich mit der Ausnehmung (24) eine außenseitig auf den Wasch-/Spülbehälter (3) aufgebrachte Beschichtung trägt.

## Claims

1. Washing machine, in particular a domestic dishwasher, comprising a washing/rinsing container (3) which provides a washing/rinsing chamber (4) and is used to receive items to be washed/rinsed, and comprising a heat pump device (9) that has a compressor (10) and a radiation shield that interacts with the compressor (10), **characterised in that** the radiation shield has a coating (22) applied to the outside of the housing (21) of the compressor (10) or a reflector (19) arranged at a distance from the compressor (10).

2. Washing machine according to claim 1, **characterised in that** the reflector (19) is made of metal, preferably stainless steel or aluminium.

3. Washing machine according to claim 1, **characterised in that** the reflector (19) is made of plastics material.

4. Washing machine according to any of the preceding claims, **characterised in that** the reflector (19) is mirror-coated on the compressor side.

5. Washing machine according to any of the preceding claims, **characterised in that** the reflector (19) concentrically surrounds the housing (21) of the compressor (10) at least in part.

6. Washing machine according to any of the preceding claims 1 to 4, **characterised in that** the reflector (19) is parabolic at least in portions.

7. Washing machine according to any of the preceding claims 1 to 4, **characterised in that** the reflector (19) is formed as a portion of the base trough (20) of the dishwasher (1).

8. Washing machine according to any of the preceding claims, **characterised in that** an insulation means (23) attached to the outside of the washing/rinsing container (3) has a recess (24).

9. Washing machine according to claim 8, **characterised in that**, in the covering region having the recess (24), the washing/rinsing container (3) has a coating applied to the outside of the washing/rinsing container (3).

## Revendications

1. Machine à laver, en particulier lave-vaisselle domestique comportant un récipient de lavage/rinçage (3) fournissant un espace de lavage/rinçage (4), lequel récipient sert à recevoir la vaisselle à nettoyer, et un dispositif de pompe à chaleur (9) présentant un compresseur (10) et un écran anti-rayonnement coopérant avec le compresseur (10), **caractérisée en ce que** l'écran anti-rayonnement est un revêtement (22) appliqué à l'extérieur du boîtier (21) du compresseur (10) ou un réflecteur (19) disposé de manière espacée par rapport au compresseur (10).

2. Machine à laver selon la revendication 1, **caractérisée en ce que** le réflecteur (19) est en métal, de préférence en acier inoxydable ou en aluminium.

3. Machine à laver selon la revendication 1, **caractérisée en ce que** le réflecteur (19) est en matière plastique.

4. Machine à laver selon l'une des revendications précédentes, **caractérisée en ce que** le réflecteur (19) est réfléchissant côté compresseur.

5. Machine à laver selon l'une des revendications précédentes, **caractérisée en ce que** le réflecteur (19) entoure le boîtier (21) du compresseur (10) de manière au moins partiellement concentrique.

6. Machine à laver selon l'une des revendications 1 à 4 précédentes, **caractérisée en ce que** le réflecteur (19) est au moins partiellement parabolique.

7. Machine à laver selon l'une des revendications 1 à 4 précédentes, **caractérisée en ce que** le réflecteur (19) est réalisé sous forme de section de la cuvette de fond (20) du lave-vaisselle (1).

8. Machine à laver selon l'une des revendications précédentes, **caractérisée en ce qu'**un isolement (23) prévu à l'extérieur du récipient de lavage/rinçage (3) présente un évidement (24).

9. Machine à laver selon la revendication 8, **caractérisée en ce que** le récipient de lavage/rinçage (3) porte un revêtement appliqué à l'extérieur du récipient de lavage/rinçage (3) dans la zone de recouvrement comportant l'évidement (24).
